# DEMANDE DE BREVET EUROPEEN

(11) **EP 1 265 392 A1**
(43) Date de publication de la demande: **11.12.2002**
(21) Numéro de dépôt: 02354089.1
(22) Date de dépôt: 05.06.2002
(51) Int. Cl.: H04L 5/02, H04L 27/26, H04B 3/54

(54) **Procédé de transmission de données en multiplexage par division de fréquences orthogonales**

(30) Priorité: 06.06.2001 FR 0107392
(71) Demandeur: STMicroelectronics S.A., 92120 Montrouge (FR)
(72) Inventeur: Mestdagh, Denis J., 38410 Saint Martin d'Uriage (FR)
(74) Mandataire: de Beaumont, Michel

(57) **Abrégé**

L'invention concerne un procédé de transmission de données (D) entre au moins trois noeuds d'un réseau en multiplexage par division de fréquences orthogonales, consistant : à allouer à chaque noeud au moins une fréquence d'émission et une fréquence de réception, les fréquences étant différentes d'un noeud à l'autre ; à former des symboles à transmettre ayant tous la même durée quel que soit le noeud d'émission ; et à adjoindre, à chaque symbole transmis, un préfixe cyclique (P) et un suffixe cyclique (S) reproduisant un nombre prédéterminé d'échantillons, respectivement de la fin et du début du symbole.

## Description

La présente invention concerne le domaine des réseaux de communication multipoints-multipoints à milieu partagé.

L'invention sera décrite par la suite en relation avec un exemple d'application aux réseaux utilisant les conducteurs d'alimentation électriques (le secteur) comme support de transmission. On utilise généralement des sous-porteuses haute fréquence qui sont modulées pour transmettre des données entre deux ou plusieurs appareils équipés de modems (modulateur-démodulateur) et raccordés au secteur. De tels réseaux peuvent être utilisés par exemple, pour connecter un micro-ordinateur à ses périphériques (imprimante, numériseur, etc.). Ils peuvent également distribuer, à l'intérieur d'une habitation, d'un bureau ou analogue, des données multimédias issues d'une connexion à un accès extérieur par exemple, une antenne satellite, un câble de fibres optiques, un modem câble, un modem XDSL, etc.

Comme plusieurs dispositifs peuvent avoir besoin simultanément de transmettre des informations sur le réseau partagé, un mécanisme de contrôle d'accès du moyen de transmission (MAC) est nécessaire pour éviter des collisions qui conduiraient à des pertes d'informations. De plus, comme différents services multimédias ou types de transmission sont susceptibles d'utiliser des mêmes conducteurs d'alimentation électriques et que ces différentes transmissions ont le plus souvent des contraintes distinctes en termes de retard, de taux d'erreur de bit etc., on a généralement recours à un mécanisme de gestion de priorité d'accès désigné plus généralement par contrôle de la qualité du service (QOS).

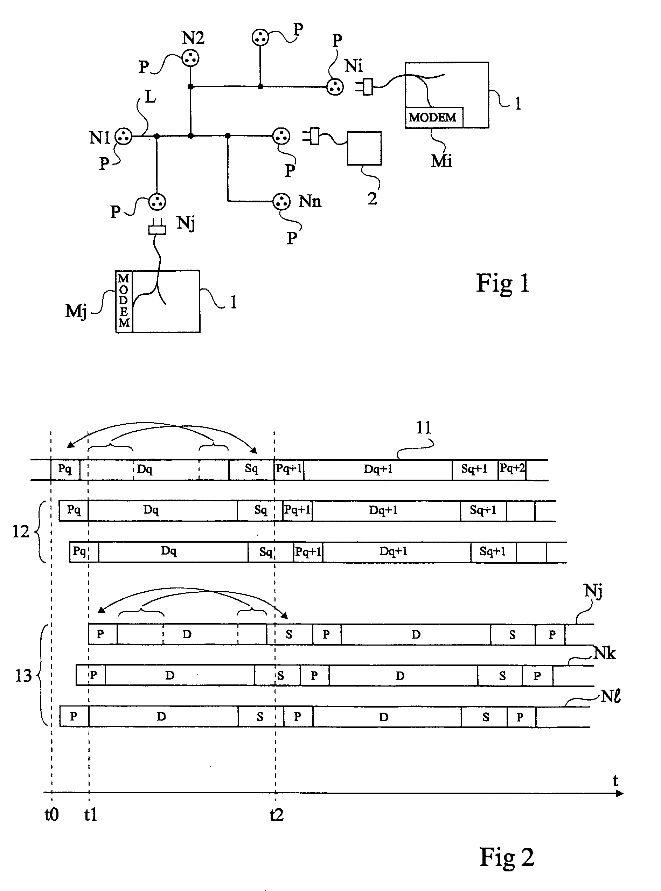

La figure 1 représente, de façon très schématique, un exemple d'architecture d'un réseau de transmission utilisant des conducteurs L d'alimentation électrique comme support de transmission. Le réseau de distribution électrique relie différentes prises P entre elles, le cas échéant par l'intermédiaire d'un tableau de répartition d'alimentation électrique pourvu de disjoncteurs ou analogues (non représentés). Les prises P ont été symbolisées en figure 1 comme étant des prises à trois conducteurs (phase, neutre et terre). Toutefois, il pourra s'agir également de prises ne disposant que de deux conducteurs (phase et neutre). Du point de vue du réseau de transmission, chaque prise est considérée comme un noeud N1, ..., ..., Ni, ..., Nj, ..., Nn.

Parmi les divers appareils électriques connectés au réseau, des appareils 1 d'un premier type sont équipés d'un modem Mi, Mj respectivement connectés aux noeuds Ni, Nj pour communiquer sur le réseau ainsi constitué. Dans l'exemple de la figure 1, un appareil 2 raccordé sur l'une des prises est un appareil sans modem qui se contente d'être alimenté par le réseau électrique.

Le plus souvent, chaque appareil 1 du premier type connecté à n'importe quelle prise du point de vue de l'alimentation électrique (noeud du point de vue du réseau) doit pouvoir envoyer et recevoir des données. Le réseau est par conséquent un réseau dit point-multipoints ou multipoints-multipoints.

Les protocoles de transmission de données sur des réseaux partagés peuvent être regroupés en trois grandes catégories. Une première catégorie concerne les accès multiples par division du temps (TDMA ou TDD) qui allouent des créneaux temporels différents à chaque transmission. Une deuxième catégorie regroupe les accès multiples par division du code (CDMA) qui allouent des codes différents pour chaque transmission. Une troisième catégorie concerne les accès multiples par division de fréquence (FDMA ou FDD) qui allouent une ou plusieurs fréquences à chaque transmission.

Tous ces systèmes de transmission sont généralement utilisés dans des systèmes multipoints à point comme, par exemple, les systèmes de communication de téléphonies mobiles GSM. Toutefois, ils présentent tous des inconvénients dans les systèmes de communication point-multipoints ou multipoints-multipoints auxquels s'applique la présente invention.

Pour les transmissions par division du temps, on doit prévoir des temps morts importants entre chaque séquence de données envoyée par chaque dispositif. Ces temps morts doivent être insérés pour éviter les collisions entre paquets transmis par différents noeuds en tenant compte de toutes les réflexions et de tous les multitrajets possibles entre l'émetteur et le récepteur. Cet inconvénient nuit fortement à la capacité du réseau en terme de débit de transmission global.

Pour les transmissions par division du code, on assiste à les limitations de débit en pratique de l'ordre de quelques centaines de kilobits par seconde (au plus, quelques mégabits par seconde) en raison de la complexité de gestion des utilisateurs multiples qui provoque de nombreuses interférences, et des différences de niveaux du signal reçu selon les chemins à parcourir par les différents signaux. La mise en oeuvre d'un système efficace en division du code requiert des moyens importants dont le coût devient vite prohibitif. De plus, la densité spectrale d'une transmission par division du code s'étend sur toute la largeur de bande utilisable, ce qui rend ce type de transmission incompatible avec les exigences de compatibilité électromagnétique qui requièrent de pouvoir interdire des émissions dans certaines bandes de fréquence spécifiques.

La présente invention concerne plus particulièrement une transmission par division de fréquence qui, avec les techniques actuelles, reste inadaptée aux transmissions point-multipoints ou multipoints-multipoints dans un réseau de plus de deux noeuds.

En effet, dans un accès multiple par division de fréquence, chaque dispositif se voit allouer un jeu prédéfini de fréquences pour émettre des données. Côté réception, il existe deux solutions. Soit, on utilise un canal de contrôle des communications pour indiquer quelles fréquences doivent être reçues et démodulées par chaque dispositif connecté au réseau multipoints-multipoints. Soit, toutes les fréquences de réception sont démodulées par tous les dispositifs et chaque dispositif de réception choisit les informations qui lui sont destinées.

Un inconvénient de l'accès multiple par division de fréquence classique est qu'il requiert des filtres analogiques pour séparer les fréquences ou les groupes de fréquences utilisés pour les sections d'émission et de réception des modems. Cela constitue un inconvénient majeur en terme de flexibilité et de capacité d'adaptation en fréquence dans la mesure où les filtres analogiques qui sont réalisés ne peuvent pas être modifiés en fonction des besoins de capacités dynamiques ou de tout autre raison requérant de modifier les fréquences allouées. A cet égard, une particularité des réseaux utilisant les conducteurs d'alimentation comme support de transmission est que la fonction de transfert du réseau est susceptible de varier fortement, par exemple, au branchement d'un appareil électrique (qu'il soit ou non équipé d'un modem) sur le secteur.

Classiquement, les normes relatives aux réseaux utilisant le secteur d'alimentation comme support de transmission prévoient l'utilisation combinée d'un accès multiple par division de fréquence et d'un accès multiple par division du temps. Il s'agit en fait d'un accès multiple à détection de porteuse et détection de collision ou anti-collision (CSMA/CA). Selon ces normes de transmission, l'accès multiple par division de fréquence est réalisé en utilisant un multiplexage par division de fréquences orthogonales (OFDM).

Il s'agit d'une technique parfaitement connue qui sera brièvement rappelée ci-après. On pourra également se référer à la littérature. Par exemple, l'article "HomePlug Standard Brings Networking to the Home" de Steve Gardner, Brian Markwalter et Larry Yonge, paru en décembre 2000 dans Communication Systems Design, expose l'application d'un tel multiplexage aux réseaux utilisant les câbles d'alimentation électrique comme support de transmission.

Les formes d'ondes OFDM sont générées en utilisant des transformées de Fourier inverses (IFFT) dans lesquelles les points du domaine fréquentiel sont constitués de jeux de symboles complexes qui modulent chaque porteuse. Le résultat de la transformée de Fourier inverse est appelé un symbole OFDM. Côté réception, les données sont reconstituées à partir d'une transformée de Fourier directe qui convertit le symbole OFDM dans le domaine fréquentiel.

La présente invention vise à proposer une nouvelle technique de transmission de données en multiplexage par division de fréquences orthogonales qui évite le recours à des filtres analogiques pour séparer les fréquences ou les groupes de fréquence utilisés par les modems.

L'invention s'inspire d'une technique de transmission connue en téléphonie qui est réputée être plus flexible en terme d'allocation de fréquences. Cette technique, connue sous le nom Zipper-DMT, n'est classiquement utilisée que pour des transmissions point à point et est décrite, par exemple, dans la demande de brevet européen N° 0 883 944 et dans l'article "Zipper VDSL: A Solution for Robust Duplex Communication over Telephone Lines" de Denis J. G. Mestdagh, Mikael R. Isaksson et Per Ödling, paru en mai 2000 dans la revue IEEE Communications Magazine, pages 90 à 96.

Dans l'application à des systèmes de communication point à point, on alloue des bandes de fréquences différentes pour l'émission et la réception (sens montant, sens descendant). Dans cette application connue à la téléphonie, les bandes de fréquences allouées sont les mêmes pour tous les fils d'un même câble et, pour éviter un phénomène de diaphonie, les fréquences ne sont pas allouées aux différents modems mais aux différents câbles.

Cette technique prometteuse n'est toutefois pas directement transposable aux réseaux utilisant le secteur d'alimentation électrique comme support de transmission.

Parmi les problèmes supplémentaires rencontrés dans ce type de réseau qui rendent l'application de la technique Zipper-DMT classique inadaptée, on notera le fait que la fonction de transfert du support de transmission varie considérablement en fonction du temps (par exemple, sous l'effet d'un branchement d'un appareil électrique), que la fonction de transfert varie d'un noeud à l'autre, et le fait qu'il s'agit d'un réseau multitrajets et multiréflexions.

Le document WO-A-99 23764 décrit un système de transmission de données en multiplexage par division de fréquences recourant à des préfixes cycliques.

Le document EP-A-1 065 818 décrit un système de transmission dans lequel un jeu de fréquence différent peut être alloué à chaque noeud du réseau.

Le document GB-A-2 332 602 décrit un système de transmission multidirectionnel prévoyant des messages de synchronisation en fin de trame. Ces messages ont pour objectif la synchronisation des transmissions.

La présente invention vise plus particulièrement à permettre l'application, aux réseaux point-multipoints et plus généralement multipoints-multipoints, de la technique Zipper-DMT connue dans les réseaux point à point.

L'invention vise également à permettre que tous les modems connectés au réseau puissent fonctionner de façon identique, sans qu'il soit nécessaire de disposer d'un noeud maître pour gérer le trafic sur le réseau.

L'invention vise également à permettre une allocation fréquentielle dynamique à la fois pour la transmission et la réception sur chaque noeud du réseau.

L'invention vise en outre à supprimer les temps morts dans les transmissions.

Pour atteindre ces objets et d'autres, la présente invention prévoit un procédé de transmission de données entre au moins trois noeuds d'un réseau en multiplexage par division de fréquences orthogonales, consistant :
à allouer à chaque noeud au moins une fréquence d'émission et une fréquence de réception, les fréquences allouées étant différentes d'un noeud à l'autre ;
à former des symboles de données à transmettre ayant tous la même durée quel que soit le noeud d'émission ; et
à adjoindre, à chaque symbole transmis, un préfixe cyclique et un suffixe cyclique reproduisant un nombre prédéterminé d'échantillons, respectivement de la fin et du début du symbole.

Selon un mode de réalisation de la présente invention, on synchronise les instants de début de transmission des symboles depuis tous les noeuds.

Selon un mode de réalisation de la présente invention, on met en forme les symboles à transmettre de façon à éviter des interférences inter-porteuses.

Selon un mode de réalisation de la présente invention, la durée du suffixe cyclique est supérieure ou égale au temps de propagation maximal sur le réseau, en tenant compte de toutes les réflexions et de tous les trajets possibles.

Selon un mode de réalisation de la présente invention, le préfixe cyclique est d'une durée supérieure ou égale à la réponse impulsionnelle du réseau.

Selon un mode de réalisation de la présente invention, le support de transmission du réseau est constitué par le réseau d'alimentation électrique.

Selon un mode de réalisation de la présente invention, on alloue, à chaque modem connecté au réseau, un jeu de fréquences d'émission et un jeu de fréquences de réception.

Selon un mode de réalisation de la présente invention, chaque jeu de fréquences associé à un modem est groupé en une bande de fréquences allouée à ce modem.

Selon un mode de réalisation de la présente invention, les fréquences allouées aux différents modems sont entrelacées.

Selon un mode de réalisation de la présente invention, les instants de début de transmission des symboles depuis tous les noeuds sont synchronisés automatiquement à chaque branchement d'un nouveau modem sur le réseau.

Selon un mode de réalisation de la présente invention, on utilise un canal de communication spécifique pour synchroniser les émissions des différents modems.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente, de façon très schématique, un réseau utilisant les lignes d'alimentation électrique comme support de transmission ;
la figure 2 illustre, sous forme de chronogrammes, un mode de mise en oeuvre de la présente invention ;
les figures 3A et 3B illustrent deux modes d'allocation de fréquences selon l'invention.

Les mêmes éléments ont été désignés par les mêmes références aux différentes figures. Pour des raisons de clarté, seuls les éléments et les étapes du procédé qui sont utiles à la compréhension de l'invention ont été représentés aux figures et seront décrits par la suite. En particulier, les données à transmettre et leur codage éventuel n'ont pas été détaillés et ne font pas l'objet de la présente invention. Les données à transmettre et le codage éventuel de ces données ainsi que leurs protocoles de transmission dépendent des applications, et l'invention pourra être mise en oeuvre quels que soient ces types de données et protocoles de transmission. De plus, les mécanismes de contrôle d'accès et autres mécanismes nécessaires au fonctionnement du réseau (par exemple, gestion de priorité, etc.) n'ont pas été détaillés et ne font pas non plus l'objet de la présente invention. L'adaptation éventuelle de ces mécanismes pour la mise en oeuvre de l'invention fait appel à des techniques parfaitement connues à la portée de l'homme du métier.

Selon l'invention, chaque noeud du réseau se voit allouer un jeu de fréquences pour ses émissions et un jeu de fréquences de réception. Les jeux de fréquences d'émission et de réception sont différents pour chaque noeud et les fréquences d'émission sont différentes des fréquences de réception pour un même noeud. Ces allocations de fréquence d'émission et de réception pour chaque noeud sont gérées par le mécanisme de contrôle d'accès du réseau.

Une caractéristique de la présente invention est de prévoir, dans le flux de transmission, un préfixe et un suffixe cycliques pour chaque symbole OFDM transmis. Cela revient, dans le domaine temporel et à l'émission de chaque symbole, à reproduire un nombre prédéterminé d'échantillons, respectivement de la fin et du début du symbole, et à insérer ces reproductions au début et à la fin du symbole pour remplir les intervalles inter-symboles. Le nombre d'échantillons reproduit (ou la durée des préfixes et suffixes) est le même pour tous les flux de transmission, mais les préfixes peuvent avoir des durées différentes de celles des suffixes.

Le préfixe cyclique de chaque symbole revient, dans le domaine temporel, à prévoir une réplique des quelques dernières micro-secondes du symbole OFDM que l'on recopie avant le symbole, dans le segment séparant deux symboles. Le rôle du préfixe cyclique est d'absorber les interférences inter-symboles qui viennent du fait que le retard d'un canal n'est pas constant avec la fréquence (c'est-à-dire réponse impulsionnelle du canal de transmission). Le recours à un préfixe cyclique pour des symboles OFDM dans un réseau utilisant le secteur comme support de transmission est connu de l'article "HomePlug Standard Brings Networking to the Home" susmentionné.

Le préfixe et le suffixe prévus par l'invention servent à éviter le recours à des filtres analogiques. En effet, en répétant une partie des données en début et en fin de symbole, on évite les discontinuités en réception de différents' symboles reçus simultanément par différents noeuds. De telles discontinuités se traduisent, côté réception lors de la transformée de Fourier directe, par du bruit s'étendant sur les fréquences (porteuses) adjacentes, ce qui est néfaste à une réception correcte. Comme, selon l'invention, les temps morts entre symboles sont remplis dans le domaine temporel par les données répétées et que le fonctionnement d'une transformée de Fourier directe est cyclique, le point de départ de prise en compte d'un symbole peut varier à l'intérieur de l'intervalle contenant le signal, c'est-à-dire la durée du symbole plus les préfixes et suffixes, sans qu'aucune information soit perdue. Cela revient à dire que les porteuses des différents symboles conservent leur orthogonalité dans le domaine fréquentiel. On peut donc ne plus recourir à des filtres analogiques mais se contenter de démoduler les fréquences de réception allouées au récepteur. Cela est rendu possible car, de plus, chaque modem (plus généralement, chaque noeud) se voit allouer un jeu de fréquences d'émission et un jeu de fréquences de réception.

De plus, l'invention ne requiert pas d'accès multiple par division du temps, ce qui a pour conséquence une plus grande capacité globale, ainsi qu'un contrôle de priorité et de gestion de qualité de service plus efficace.

La figure 2 illustre, par des chronogrammes schématiques, un mode de mise en oeuvre de la présente invention.

On suppose un flux 11 de transmission de données, émis par le noeud Nᵢ à un instant t0. Ce flux contient successivement des symboles OFDM Dq, Dq+1. Chaque symbole est précédé du symbole précédant ou suivant par un segment dans lequel est recopiée une partie de chacun des symboles voisins. En pratique et selon la présente invention, chaque symbole Dq est précédé par un préfixe Pq reproduisant un intervalle de temps correspondant à la fin du symbole Dq et est suivi d'un suffixe Sq correspondant à une recopie du début du symbole Dq.

Dans le domaine temporel, d'autres flux de données à des fréquences différentes se chevauchent sur le noeud de réception Ni. Comme l'illustre la figure 2, ces chevauchements proviennent tout d'abord de réflexions 12 du flux émis 11. Ces réflexions constituent bien évidemment temporellement des reproductions du flux d'origine 11 retardées dans le temps en fonction des temps de propagation. Pour simplifier, seules deux réflexions 12 ont été représentées. On notera toutefois que ces réflexions sont multiples dans un tel réseau.

D'autres interférences sont constituées par les flux de symboles 13 émis par d'autres noeuds du réseau. Dans l'exemple de la figure 2, on a représenté trois flux 13 correspondant à des émissions de noeuds Nj, Nk et Nl. La structure de chaque flux de données est la même que celle exposée pour le flux 11, c'est-à-dire comprend à chaque fois un préfixe P et un suffixe S associés à chaque symbole. Bien sûr, des réflexions multiples des flux 13 parviennent également au noeud Ni.

Les fréquences dans lesquelles sont transmis les flux 13 sont différentes pour chacun de ces flux et différentes des fréquences dans lesquelles est transmis le flux 11. Par conséquent, côté noeud Ni, on peut réceptionner sans difficultés la ou les fréquences de réception qui lui sont allouées. Il suffit que la fenêtre de réception soit comprise entre les instants t1 et t2 entre lesquels seuls les symboles de même rang (q) sont présents. La détermination de la fenêtre de réception à l'intérieur de la plage t1-t2 se fait dans une phase classique d'initialisation (synchronisation temporelle) au début de chaque communication et peut être adaptée (recalée) en cours de communication.

On notera que, une fois repassé en domaine fréquentiel (après la transformée de Fourier directe), le fait que les données modulées récupérées proviennent du corps D du symbole ou du suffixe S n'a plus aucune importance.

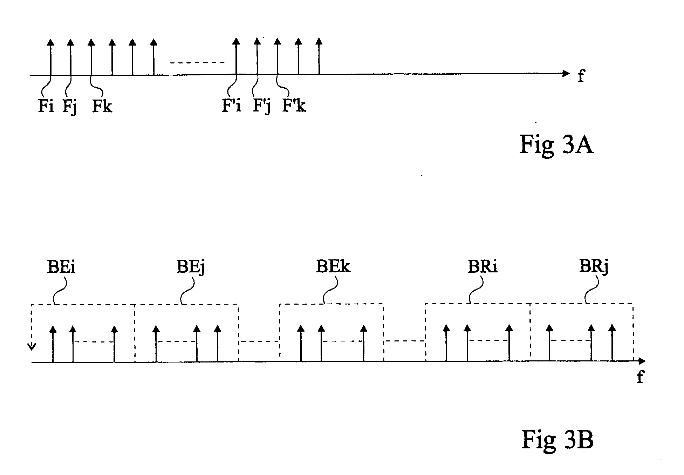

Les figures 3A et 3B illustrent le fonctionnement de l'invention selon que les allocations de fréquences à chaque émetteur-récepteur sont entrelacées (figure 3A) ou regroupées. Dans le premier cas, chaque noeud Ni, Nj, Nk a des fréquences Fi, Fj, Fk, F'i, F'j, F'k de porteuse qui sont individuellement voisines des fréquences des deux autres noeuds. Dans le deuxième cas, chaque noeud se voit allouer une bande de fréquences BEi, BEj, BEk pour l'émission et une BRi, BRj, BRk pour la réception, toutes les fréquences de porteuse de la bande d'un groupe étant voisines les unes des autres. Cette différence de réalisation conditionne simplement les fréquences du démodulateur mais est sans incidence sur les flux de transmission à préfixe et suffixe.

Les allocations de fréquences elles-mêmes ne font pas partie de l'invention et sont effectuées par des moyens classiques. En particulier, ces allocations de fréquences sont effectuées en tenant compte du fait que la modulation est une modulation d'amplitude et quadrature de phase. On peut recourir à des constellations de plus ou moins de points (par exemple, compris entre 4 et 1024 points) selon le rapport signal/bruit. On veillera seulement de façon parfaitement classique à ne pas chevaucher le point de constellation voisin par le bruit du point concerné.

Selon la présente invention, la longueur du suffixe cyclique est choisie en fonction des délais de propagation du réseau et, plus précisément, du délai de réflexion ou de réception des signaux sur un noeud donné.

Selon un premier mode de réalisation, chaque émetteur du réseau se met à émettre dès qu'il reçoit un symbole. Dans ce cas, la durée du suffixe correspond à deux fois le temps de propagation maximal dans le réseau, en tenant compte de toutes les réflexions et de tous les trajets (multitrajets) possibles.

Selon un deuxième mode de réalisation préféré, correspondant à l'illustration de la figure 2, l'émission des différents modems est synchronisée de sorte que tous les modems connectés aux noeuds du réseau émettent en même temps. Dans ce cas, la durée du suffixe cyclique peut être avantageusement limitée à une fois le temps de propagation maximal du réseau, en tenant compte de toutes les réflexions et de tous les multitrajets possibles.

Selon un autre mode de réalisation encore plus préféré, on évite le recours à une synchronisation des émissions en mettant en forme les symboles OFDM à transmettre de façon à éviter, en réception sur un même noeud, les interférences inter-porteuses de plusieurs symboles émis par des noeuds différents. Une telle technique de mise en forme ("shaping") est parfaitement connue dans d'autres domaines d'application des symboles OFDM comme, par exemple, la réception de signaux vidéo sur des antennes de réception de signaux hertziens terrestres (antenne en râteau) ou la téléphonie, et est décrite, par exemple, dans l'article "Zipper VDSL: A Solution for Robust Duplex Communication over Telephone Lines" susmentionné. Une telle mise en forme impose toutefois de grouper les porteuses de chaque jeu alloué à chaque noeud (figure 3B).

On notera que, pour la mise en oeuvre de l'invention, il est indispensable que tous les symboles OFDM aient la même longueur (durée T). Cette longueur est définie par l'écart Δf entre deux porteuses successives de la modulation en quadrature d'amplitude et de phase (T = 1/Δf).

Une différence importante de l'application point-multipoints ou multipoints-multipoints (c'est-à-dire d'un réseau ayant plus de deux noeuds), par rapport à l'application point à point de la téléphonie, est que, en téléphonie, on évite d'allouer des fréquences différentes aux différents modems afin d'éviter toute diaphonie. A l'inverse, selon la présente invention, il est indispensable d'allouer à chaque modem au moins une fréquence d'émission et au moins une fréquence de réception distinctes de celles des autres modems.

De façon classique, pour éviter le recours à des égaliseurs complexes en réception et éviter des interférences inter-symboles, la durée des préfixes cycliques est supérieure (au moins égale) à la réponse impulsionnelle du réseau de transmission.

La synchronisation éventuelle des noeuds du réseau peut être effectuée de façon autonome. Par exemple, on peut utiliser un canal de signalisation qui véhicule un signal de référence temporel du réseau. On suppose que tous les modems sont branchés sur des prises de raccordement secteur. A l'allumage d'un des modems, celui-ci envoie de façon permanente un signal OFDM particulier constitué de données prédéfinies sur un jeu de fréquences de signalisation prédéfinies. A la réception par un autre modem allumé, ce dernier renvoie immédiatement un signal de réponse sur une autre fréquence de signalisation prédéfinie. Lorsque le premier modem reçoit la réponse, il peut calculer la durée qui devient alors la durée de propagation qu'il renvoie dans un canal spécifique. A la réception du contenu de ce canal, le deuxième modem connaît désormais la durée à appliquer pour une transmission à ses propres signaux OFDM, de sorte que les deux modems susmentionnés sont désormais capables d'émettre des signaux en même temps.

Pendant cette phase d'initialisation, il peut se produire des collisions si un autre modem effectue la même opération que le deuxième. Ce problème peut être résolu en prévoyant des mécanismes aléatoires qui consistent, lorsqu'une collision intervient, à placer chaque noeud dans un mode d'attente pendant une durée déterminée par un générateur aléatoire. Ce générateur aléatoire autorise de nouveau le modem concerné à redémarrer certains cycles d'initialisation ultérieurement.

Bien entendu, la présente invention est susceptible de diverses variantes et modifications qui apparaîtront à l'homme de l'art. En particulier, la mise en oeuvre du procédé de transmission de l'invention est à la portée de l'homme du métier à partir des indications fonctionnelles données ci-dessus. De plus, bien que l'invention ait été décrite en relation plus particulière avec un réseau utilisant les câbles d'alimentation comme support de transmission, celle-ci pourra s'appliquer également à tout autre réseau point-multipoints ou multipoints-multipoints dans lequel des problèmes similaires se posent. A titre d'exemple, on citera les applications aux communications sans fil dans lesquelles se posent les problèmes de variation de la fonction de transfert en fonction du temps, et qui sont multitrajets et multiréflexions.

## Revendications

1. Procédé de transmission de données (D) entre au moins trois noeuds (Ni, Nj, Nk) d'un réseau en multiplexage par division de fréquences orthogonales, **caractérisé en ce qu'**il consiste :
à allouer à chaque noeud au moins une fréquence d'émission et une fréquence de réception, les fréquences allouées étant différentes d'un noeud à l'autre ;
à former des symboles de données à transmettre ayant tous la même durée quel que soit le noeud d'émission ; et
à adjoindre, à chaque symbole transmis, un préfixe cyclique (P) et un suffixe cyclique (S) reproduisant un nombre prédéterminé d'échantillons, respectivement de la fin et du début du symbole.

2. Procédé selon la revendication 1, **caractérisé en ce qu'**il consiste en outre à synchroniser les instants de début de transmission des symboles (OFDM) depuis tous les noeuds (Ni).

3. Procédé selon la revendication 1, **caractérisé en ce qu'**il consiste en outre à mettre en forme les symboles (OFDM) à transmettre de façon à éviter des interférences inter-porteuses.

4. Procédé selon l'une quelconque des revendications 1 à 3, **caractérisé en ce que** la durée du suffixe cyclique (S) est supérieure ou égale au temps de propagation maximal sur le réseau, en tenant compte de toutes les réflexions et de tous les trajets possibles.

5. Procédé selon l'une quelconque des revendications 1 à 4, **caractérisé en ce que** le préfixe cyclique (P) est d'une durée supérieure ou égale à la réponse impulsionnelle du réseau.

6. Procédé selon l'une quelconque des revendications 1 à 5, **caractérisé en ce que** le support de transmission (L) du réseau est constitué par le réseau d'alimentation électrique.

7. Procédé selon l'une quelconque des revendications 1 à 6, **caractérisé en ce qu'**il consiste à allouer, à chaque modem (Mi) connecté au réseau, un jeu de fréquences d'émission et un jeu de fréquences de réception.

8. Procédé selon la revendication 7, **caractérisé en ce que** chaque jeu de fréquences associé à un modem est groupé en une bande (BEi, BRi) de fréquences allouée à ce modem.

9. Procédé selon la revendication 7, **caractérisé en ce que** les fréquences allouées aux différents modems sont entrelacées.

10. Procédé selon l'une quelconque des revendications 1 à 9, **caractérisé en ce que** les instants de début de transmission des symboles depuis tous les noeuds sont synchronisés automatiquement à chaque branchement d'un nouveau modem sur le réseau.

11. Procédé selon la revendication 10, **caractérisé en ce qu'**il consiste à utiliser un canal de communication spécifique pour synchroniser les émissions des différents modems.
